# EUROPÄISCHE PATENTSCHRIFT

(11) **EP 4 283 156 B1**
(45) Veröffentlichungstag und Bekanntmachung des Hinweises auf die Patenterteilung: **28.08.2024**
(21) Anmeldenummer: 22174981.5
(22) Anmeldetag: 24.05.2022
(51) Int. Cl.: F16D 65/12, B23B 27/00

(54) **BREMSSCHEIBENANORDNUNG, ANTRIEBSSYSTEM UND DOPPELSEITENSCHLEIFMASCHINE SOWIE VERFAHREN ZUR BEARBEITUNG EINER BREMSSCHEIBE**
BRAKE DISC ARRANGEMENT, DRIVE SYSTEM AND DOUBLE SIDE GRINDING MACHINE AND METHOD FOR MACHINING A BRAKE DISC
ENSEMBLE DISQUE DE FREIN, SYSTÈME D'ENTRAINEMENT ET MACHINE À RECTIFIER DOUBLE FACE, AINSI QUE PROCÉDÉ D'USINAGE D'UN DISQUE DE FREIN

(43) Veröffentlichungstag der Anmeldung: 29.11.2023
(73) Patentinhaber: Supfina Grieshaber GmbH & Co. KG, 77709 Wolfach (DE)
(72) Erfinder: Wolber, Simon, 77761 Schiltach (DE)
(74) Vertreter: DREISS Patentanwälte PartG mbB

(56) Entgegenhaltungen:
- DE-A1- 102011 119 759
- DE-A1- 19 915 215
- DE-B3- 102015 003 709

## Beschreibung

Die Erfindung betrifft eine Bremsscheibenanordnung zum Transport einer Bremsscheibe in einer Anlage zur Bearbeitung der Bremsscheibe. Die Erfindung betrifft ferner ein Antriebssystem, eine Doppelseitenschleifmaschine sowie ein Verfahren zur Bearbeitung einer Bremsscheibe.

Aus der DE 199 15 215 A1 ist eine zusammengesetzte Bremsscheibe einer Scheibenbremse für ein Fahrzeug bekannt.

Aus der DE 10 2011 119 759 A1 ist eine Bremsscheibenanordnung für eine Scheibenbremse eines Kraftwagens bekannt. Aus der DE 10 2015 003 709 B3 ist eine mehrspindlige Werkzeugmaschine zum simultanen Bohren von Bohrungen in Bremsscheiben bekannt.

Der Erfindung liegt die Aufgabe zugrunde, einen einfachen Transport einer Bremsscheibe in einer Anlage zur Bearbeitung der Bremsscheibe zu ermöglichen.

Diese Aufgabe wird durch eine Bremsscheibenanordnung mit den Merkmalen des Patentanspruchs 1 gelöst.

Die Aufnahmeeinrichtung ermöglicht einen einfachen Kraftschluss und/oder Formschluss mit der Berandung der zentralen Öffnung des Bremsscheibentopfs und/oder mit einem an die Berandung angrenzenden Oberflächenabschnitt des Bremsscheibentopfs. Dies ermöglicht es, eine zentrale Bremsscheibenachse und eine zentrale Aufnahmeachse der Aufnahmeeinrichtung miteinander fluchtend anzuordnen und die Bremsschreibe in einem Bereich zu fixieren, der möglichst weit von den Reibflächen des Reibrings der Bremsscheibe entfernt ist. Ferner umfasst die Aufnahmeeinrichtung einen Andrückkörper mit einer ersten Andrückfläche, die zum Andrücken gegen eine ringförmige erste Stirnfläche des Bremsscheibentopfs ausgebildet ist. Diese Andrückfläche ermöglicht eine zusätzliche Fixierung der Bremsscheibe, und zwar in einem Bereich des Bremsscheibentopfs, der ebenfalls zu den Reibflächen des Reibrings beabstandet ist.

Insbesondere ist die Bremsscheibenanordnung derart ausgebildet, dass die Sicherung der Bremsscheibe an der Aufnahmeeinrichtung bei einem Transport wirksam ist, bei welchem die zentrale Bremsscheibenachse horizontal orientiert ist. Dies ermöglicht einen "stehenden" Transport der Bremsscheibe, bei welchem sich der Reibring der Bremsscheibe in einer im Wesentlichen vertikalen Transportebene erstreckt. Dies ist insbesondere vorteilhaft in Verbindung mit einem sich in einer Vertikalebene erstreckenden Arbeitsspalt einer Doppelseitenschleifmaschine, welche zwei Schleifscheiben aufweist, mit einander zugewandten Wirkflächen, welche jeweils zur Bearbeitung einer der beiden Reibflächen des Reibrings ausgebildet sind.

Es ist bevorzugt, dass die Zentriervorrichtung in Richtung des Sicherungszustands vorgespannt ist und/oder dass der Sicherungszustand ein Ruhezustand der Aufnahmeeinrichtung ist. Dies hat den Vorteil, dass für die Sicherung der Bremsscheibe an der Aufnahmeeinrichtung der Bremsscheibenanordnung keine Energie von außen zugeführt werden muss. Insbesondere ist die Aufnahmeeinrichtung nicht mit einer Werkzeugspindel verbindbar. Die Bremsscheibenanordnung ist also autark und verbleibt ohne externe Energiezufuhr in einem Zustand, in welchem die Bremsscheibe an der Aufnahmeeinrichtung gesichert ist.

Eine bevorzugte Möglichkeit zur Beaufschlagung und Vorspannung der Zentriervorrichtung besteht in der Verwendung einer Feder, insbesondere einer mechanischen Feder. Zusätzlich oder alternativ hierzu ist auch die Verwendung pneumatischer und/oder hydraulischer Federn denkbar.

Es ist ferner bevorzugt, dass die Aufnahmeeinrichtung eine Betätigungseinrichtung zur Überführung der Zentriervorrichtung aus dem Sicherungszustand in den Einführzustand aufweist. Eines solche Betätigung kann mit der Zufuhr von Energie von außen einhergehen; diese Energiezufuhr wird aber nur für einen Übergangszustand benötigt, in welchem die Zentrierfläche in die Öffnung des Bremsscheibentopfs eingeführt wird.

Es ist ferner bevorzugt, dass die Aufnahmeeinrichtung einen Handhabungsabschnitt mit einer Handhabungsfläche zur Handhabung durch einen externen Greifer aufweist, wobei sich die Handhabungsfläche vorzugsweise konzentrisch zu der Aufnahmeachse erstreckt. Eine solche Handhabungsfläche ermöglicht ein einfaches Greifen der Aufnahmeeinrichtung, insbesondere einer Aufnahmeeinrichtung, an welcher eine Bremsscheibe gesichert ist. Bei dem Greifer kann es sich insbesondere um einen Zweibackengreifer handeln, der eine vorzugsweise zylindrische Handhabungsfläche sicher ergreifen und zum Transport einer Bremsscheibenanordnung verlagern kann.

Es ist bevorzugt, dass die Handhabungsfläche einen Durchmesser aufweist, der maximal die Hälfte des Außendurchmessers des Reibrings der Bremsscheibe der Bremsscheibenanordnung beträgt. Dies ermöglicht ein sicheres Greifen einer Bremsscheibenanordnung bei kompaktem Bauraum.

Der Handhabungsabschnitt ist vorzugsweise auf einer der ersten Andrückfläche abgewandten Seite des Andrückkörpers angeordnet. Auf diese Weise kann ein externer Greifer auch einfacher Bauart kollisionsfrei ansetzen.

Erfindungsgemäß weist die Aufnahmeeinrichtung eine mit dem Andrückkörper verbundene zentrale Welle auf, welche mit einem freien Ende über die Zentriervorrichtung hervorsteht. Das freie Ende kann beispielsweise dazu genutzt werden, die Bremsscheibenanordnung mit dem freien Ende der zentralen Welle in eine Führungshülse eines Antriebssystems einzuführen, das zum Drehantrieb einer Bremsscheibe dient.

Erfindungsgemäß ist vorgesehen, dass das freie Ende mindestens einen Kopplungsabschnitt aufweist, der ausgebildet ist zur Herstellung eines längs der Wellenachse der zentralen Welle wirksamen Formschlusses und/oder Kraftschlusses mit einem Kopplungspartner, der von einem Spindelantrieb des Antriebssystems zum Drehantrieb einer Bremsscheibe bereitgestellt ist. Der Kopplungspartner ermöglicht es, die zentrale Welle und somit den Andrückkörper mit einer Andrückkraft zu beaufschlagen, welche die erste Andrückfläche des Andrückkörpers gegen die ringförmige erste Stirnfläche des Bremsscheibentopfs andrückt.

Die Erfindung betrifft ferner ein Antriebssystem nach Patentanspruch 10, nämlich ein Antriebssystem zum Drehantrieb einer Bremsscheibe einer vorstehend beschriebenen Bremsscheibenanordnung, wobei das Antriebssystem die vorstehend beschriebene Bremsscheibenanordung umfasst und wobei das Antriebssystem den Spindelantrieb mit einer zweiten Andrückfläche aufweist, welche gegen eine der ersten Stirnfläche abgewandte, ringförmige zweite Stirnfläche des Bremsscheibentopfs andrückbar ist. Dies ermöglicht die Verwendung einer vorstehend beschriebenen Aufnahmeeinrichtung zur Nutzung in einem Antriebssystem, wobei voneinander abgewandte Stirnflächen eines Bremsscheibentopfs zwischen der ersten Andrückfläche des Andrückkörpers der Aufnahmeeinrichtung und der zweiten Andrückfläche des Spindelantriebs angeordnet sind und zwischen diesen Andrückflächen fixiert sind.

Besonders bevorzugt ist es, dass das Antriebssystem einen Kopplungspartner aufweist, der mit dem Kopplungsabschnitt der zentralen Welle der Aufnahmeeinrichtung zusammenwirkt und die zentrale Welle auf Zug beansprucht, sodass die erste Andrückfläche gegen die erste Stirnfläche des Bremsscheibentopfs und die zweite Andrückfläche gegen die zweite Stirnfläche des Bremsscheibentopfs angedrückt wird. Insgesamt ergibt sich eine zu einer zentralen Spindelachse zentrierte Anordnung einer Bremsscheibe, die im Bereich der Stirnflächen des Bremsscheibentopfs derart fixiert ist, dass bei einer schleifenden Bearbeitung der Reibflächen des Reibrings der Bremsscheibe sehr hohe Drehmomente auf die Reibfläche ausgeübt werden können, ohne den Drehantrieb der Bremsscheibe zu beeinflussen (es wird also insbesondere ein Durchrutschen der Bremsscheibe relativ zu dem Spindelantrieb verhindert).

Besondere hohe Drehmomente können ausgeübt werden, wenn die erste Andrückfläche und die zweite Andrückfläche sich bezogen auf die Wellenachse der zentralen Welle in radialer Richtung überlappen.

Die Erfindung betrifft ferner eine Doppelseitenschleifmaschine nach Patentanspruch 13, nämlich eine Doppelseitenschleifmaschine mit zwei Schleifscheiben und mit einem vorstehend beschriebenen Antriebssystem. Die Schleifscheiben sind insbesondere um Schleifscheibenachsen rotierend antreibbar, welche horizontal orientiert sind.

Die Erfindung betrifft ferner ein Verfahren zur Bearbeitung einer Bremsscheibe mit den Merkmalen des Patentanspruchs 15.

Weitere Merkmale und Vorteile der durch die Patentansprüche bestimmten Erfindung sind Gegenstand der nachfolgenden Beschreibung und der zeichnerischen Darstellung bevorzugter Ausführungsbeispiele.

In der Zeichnung zeigt
- Fig. 1: eine perspektivische Ansicht einer Anlage zur schleifenden Bearbeitung einer Bremsscheibe, in einem Ausgangszustand;
- Fig. 2: eine perspektivische Ansicht der Anlage gemäß Fig. 1, in einem Zustand zur Vorbereitung einer Sicherung der Bremsscheibe an einer Aufnahmeeinrichtung;
- Fig. 2a: einen Vertikalschnitt längs einer in Fig. 2 mit IIa angedeuteten Schnittebene;
- Fig. 2b: einen in Fig. 2a mit IIb bezeichneten Ausschnitt in vergrößerter Darstellung;
- Fig. 3: einen der Fig. 2b entsprechenden Ausschnitt in einem Zustand, in welchem die Bremsscheibe an der Aufnahmeeinrichtung gesichert ist und gemeinsam mit der Aufnahmeeinrichtung eine Bremsscheibenanordnung bildet;
- Fig. 4: eine perspektivische Ansicht der Anlage gemäß Fig. 1, in einem Transportzustand der Bremsscheibenanordnung gemäß Fig. 3;
- Fig. 5: eine perspektivische Ansicht der Anlage gemäß Fig. 1, in einem Zustand zur Vorbereitung einer Kopplung zwischen der Bremsscheibenanordnung gemäß Fig. 3 und einem Spindelantrieb eines Antriebssystems einer Doppelseitenschleifmaschine;
- Fig. 5a: einen Vertikalschnitt längs einer in Fig. 5 mit Va angedeuteten Schnittebene;
- Fig. 5b: einen in Fig. 5a mit Vb bezeichneten Ausschnitt in vergrößerter Darstellung;
- Fig. 6: einen der Fig. 5b entsprechenden Ausschnitt in einem Zustand, in welchem die Bremsscheibenanordnung und der Spindelantrieb miteinander gekoppelt sind;
- Fig. 7: eine perspektivische Ansicht der Anlage gemäß Fig. 1, bei schleifender Bearbeitung der Bremsscheibe;
- Fig. 8: eine Draufsicht einer weiteren Bremsscheibenanordnung zur Verwendung bei einer Anlage gemäß Fig. 1 bis 7;
- Fig. 8a: einen Vertikalschnitt der Bremsscheibenanordnung gemäß Fig. 8, in einem Sicherungszustand;
- Fig. 8b: eine der Fig. 8a entsprechende Darstellung, in einem Einführzustand; und
- Fig. 8c: einen in Fig. 8b mit VIIIc bezeichneten Ausschnitt in vergrößerter Darstellung.

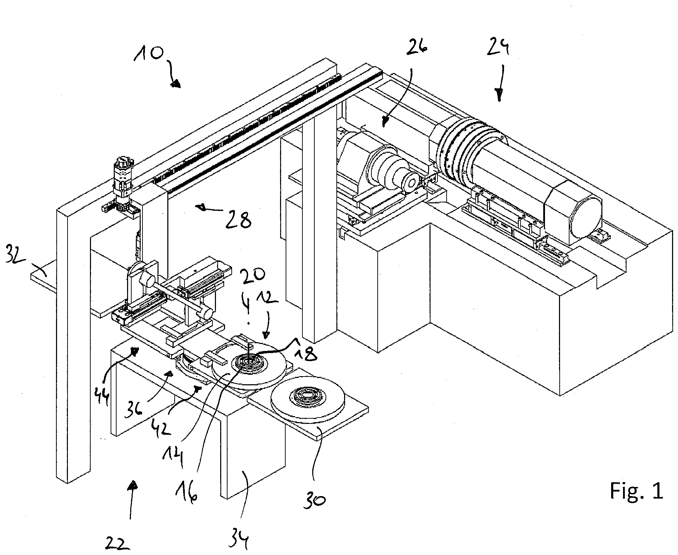

Eine Anlage zur schleifenden Bearbeitung einer Bremsscheibe ist in den Figuren 1, 2, 4, 5 und 7 perspektivisch und in unterschiedlichen Zuständen dargestellt. Diese Zustände beziehen sich auf eine Bremsscheibe, welche mit dem Bezugszeichen 12 bezeichnet ist und welche die Anlage 10 durchläuft.

Die Bremsscheibe 12 weist einen Reibring 14 und einen Bremsscheibentopf 16 auf. Der Bremsscheibentopf 16 weist eine zentrale Öffnung 18 auf. Die Öffnung 18, der Bremsscheibentopf 16 und der Reibring 14 erstrecken sich konzentrisch zu einer zentralen Bremsscheibenachse 20.

Die Anlage 10 weist einen Aufnahmebereich 22 zur Aufnahme einer Bremsscheibe 12 auf sowie eine Doppelseitenschleifmaschine 24 mit einem Antriebssystem 26 zum Drehantrieb einer Bremsscheibe 12. Zur Überführung einer Bremsscheibe 12 zwischen dem Aufnahmebereich 22 und dem Antriebssystem 26 der Doppelseitenschleifmaschine 24 umfasst die Anlage 10 einen Transportbereich 28.

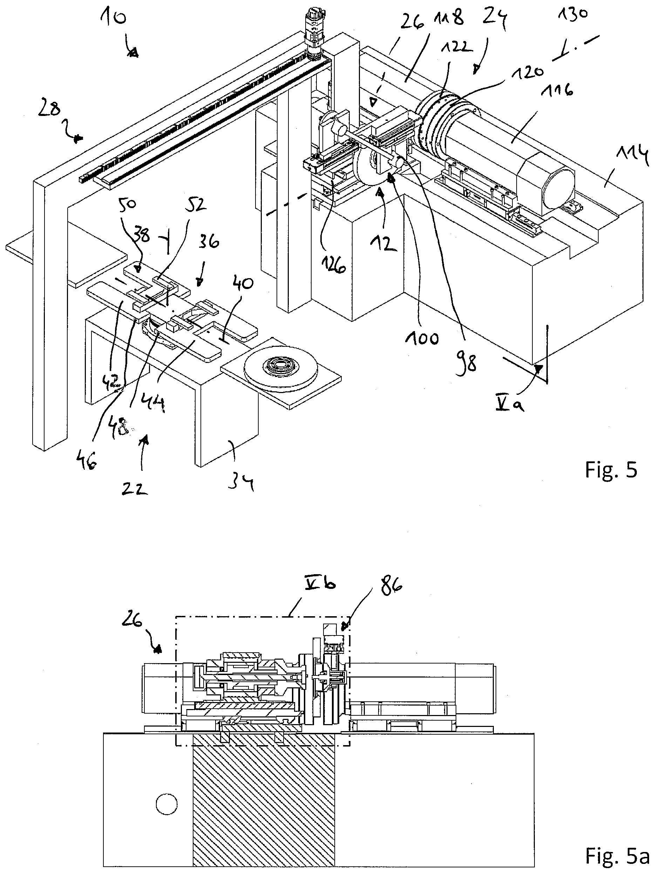

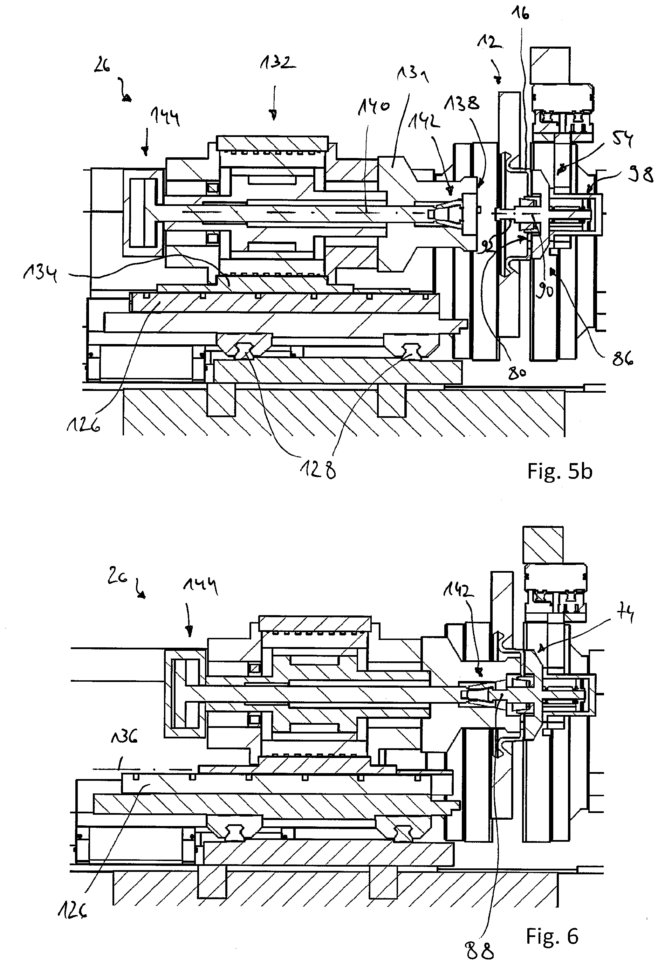

Der Aufnahmebereich 22 grenzt an eine Zuführung 30 für schleifend zu bearbeitende Bremsscheiben 12 und an eine Abführung 32 für schleifend bearbeitete Bremsscheiben 12. Zwischen der Zuführung 30 und der Abführung 32 ist ein ortsfestes Gestell 34 angeordnet, das zur Anordnung eines Drehtellers 36 dient, vergleiche Figuren 1 und 5. Der Drehteller 36 ist relativ zu dem Gestell 34 um eine Vertikalachse 38 verdrehbar und längs einer horizontalen Hubachse 40 relativ zu dem Gestell 34 verfahrbar.

Der Drehteller 36 weist zwei Bremsscheibenaufnahmen 42 und 44 auf, welche um jeweils zugeordnete, horizontale Schwenkachsen 46, 48 zwischen einer Horizontallage und einer Vertikallage verschwenkbar sind. Zur Fixierung einer Bremsscheibe 12 an einer Bremsscheibenaufnahme 42, 44 weisen diese jeweils eine Auflagefläche 50 und einen zu der Auflagefläche 50 beabstandeten Gegenhalter 52 auf. Die Auflagefläche 50 weist in der Horizontallage einer der Bremsscheibenaufnahmen 42, 44 nach oben.

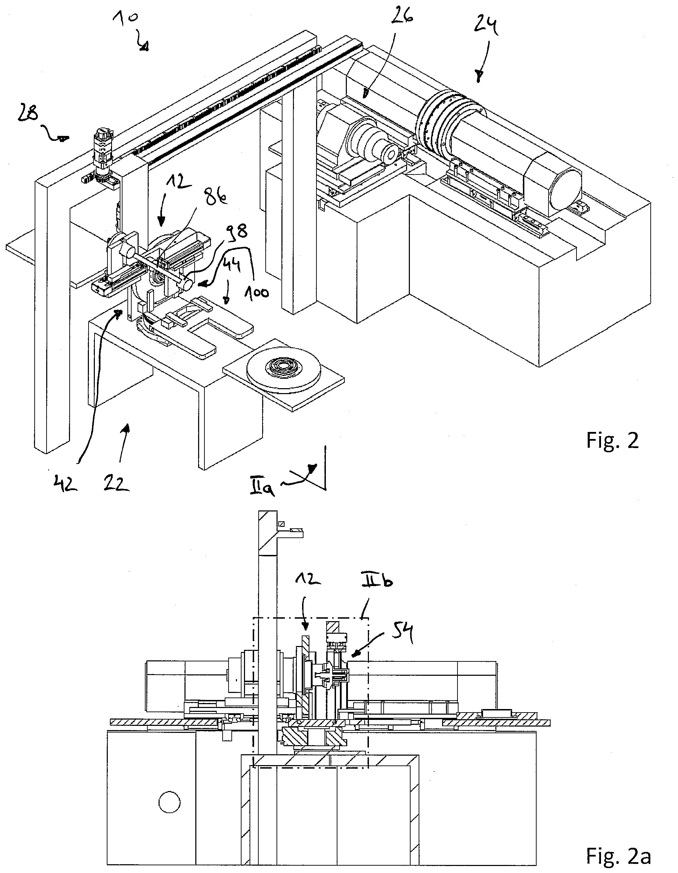

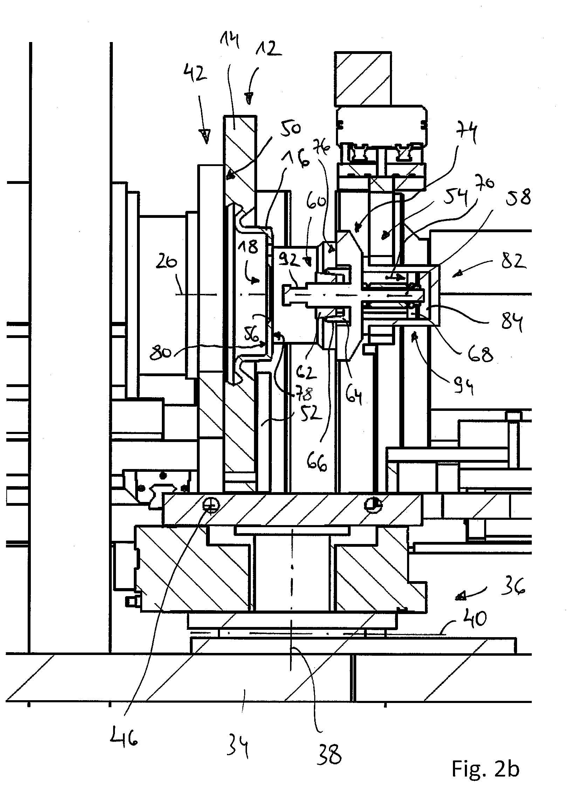

In Figur 1 ist die aus der Zuführung 30 übernommene Bremsscheibe 12 in einem Zustand dargestellt, in welchem diese auf der Auflagefläche 50 der Bremsscheibenaufnahme 42 aufliegt und im Bereich des Reibrings 14 durch den Gegenhalter 52 fixiert ist. Von diesem Zustand ausgehend wird der Drehteller 36 um die Vertikalachse 38 um 180° verdreht und die Bremsscheibenaufnahme 42 um die Schwenkachse 46 verschwenkt, sodass die Bremsscheibe 12 eine in Figur 2 dargestellte Vertikallage einnimmt, vergleiche auch Figuren 2a und 2b.

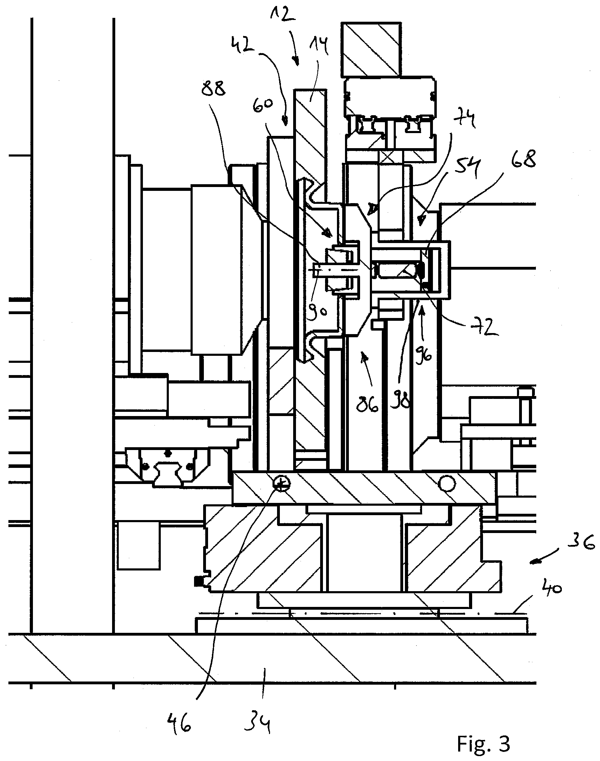

Die Anlage 10 umfasst ferner eine Aufnahmeeinrichtung 54, deren Aufbau und Funktion nachfolgend unter Bezugnahme auf Figuren 2b und 3 beschrieben werden.

Die Öffnung 18 der Bremsscheibe 12 ist begrenzt durch eine umfangsseitig geschlossene Berandung 56. Die Aufnahmeeinrichtung 54 erstreckt sich entlang einer zentralen Aufnahmeachse 58 und weist eine Zentriervorrichtung 60 auf.

Die Zentriervorrichtung 60 weist einen Spannkegel 62 und eine Spannhülse 64 mit einer Zentrierfläche 66 auf. Der Spannkegel 62 ist über Zuganker (ohne Bezugszeichen) mit einem Kolben 68 verbunden, der in einer Vorspannrichtung 70 vorgespannt ist, insbesondere mittels einer Feder 72. Die Feder 72 ist als Druckfeder ausgebildet und übt eine Druckkraft sowohl auf den Kolben 68 als auch auf einen Andrückkörper 74 der Aufnahmeeinrichtung 54 aus.

Der Andrückkörper 74 weist eine insbesondere ringförmige erste Andrückfläche 76 zum Andrücken gegen eine ringförmige erste Stirnfläche 78 des Bremsscheibentopfs 16 auf. Der Bremsscheibentopf weist ferner eine der ersten Stirnfläche 78 abgewandte zweite Stirnfläche 80 auf.

In einem Ruhezustand der Aufnahmeeinrichtung 54 ist die Zentriervorrichtung 60 mittels der Feder 72 vorgespannt, wobei sich die Vorspannung über den Kolben 68 und die Zuganker auf den Spannkegel 62 überträgt und diesen in die Spannhülse 64 drückt, sodass die Zentrierfläche 66 der Spannhülse 64 nach radial außen gedrängt wird. In diesem Zustand weist die Zentrierfläche 66 einen größeren Durchmesser auf als die Berandung 56 der Öffnung 18 der Bremsscheibe 12.

Um den Durchmesser der Zentrierfläche 66 zu verkleinern, weist die Aufnahmeeinrichtung 54 eine Betätigungseinrichtung 82 mit einem Druckraum 84 auf, der durch eine Leitung 86 (vergleiche Figur 2) gespeist ist. Der Druckraum 84 wirkt auf eine der Feder 72 abgewandte Seite des Kolbens 68, sodass eine Erhöhung des Drucks in dem Druckraum 84 dazu führt, dass sich der Druckraum 84 entgegen der Wirkung der Feder 72 vergrößert. Dies geht damit einher, dass der Spannkegel 62 sich von der Spannhülse 64 löst, sodass sich die Zentrierfläche 66 verkleinert und in einem Einführzustand in die Öffnung 18 der Bremsscheibe 12 einführbar ist.

Für die genannte Einführung sind die zentrale Bremsscheibenachse 20 und die zentrale Aufnahmeachse 58 miteinander fluchtend angeordnet. Der Drehteller 36 wird entlang der Hubachse 40 verfahren, sodass ausgehend von der beabstandeten Anordnung von Bremsscheibe 12 und Aufnahmeeinrichtung 54 (vergleiche Figur 2b) die Zentriereinrichtung 60 in die Öffnung der Bremsscheibe 12 eingeführt wird, vergleiche Figur 3. Durch Lösen der Betätigungseinrichtung 82 (Druckabfall in dem Druckraum 84) übt die Feder 72 wieder eine Vorspannkraft auf den Spannkegel 62 auf, sodass die Zentrierfläche 66 der Zentriervorrichtung 60 kraftschlüssig gegen die Berandung 56 der Öffnung 18 der Bremsscheibe 12 gespannt wird. Gleichzeitig gelangt die erste Andrückfläche 76 des Andrückkörpers 74 in Anlage mit der ersten Stirnfläche 78 des Bremsscheibentopfs 16.

Die Bremsscheibe 12 und die Aufnahmeeinrichtung 54 bilden gemeinsam eine Bremsscheibenanordnung 86, welche ausgehend von dem Aufnahmebereich 22 durch den Transportbereich 28 hindurch dem Antriebssystem 26 der Anlage 10 zugeführt wird.

Die Aufnahmeeinrichtung 54 weist ferner eine zentrale Welle 88 auf, welche sich entlang einer Wellenachse 90 erstreckt und insbesondere einstückig mit dem Andrückkörper 74 verbunden ist. Die zentrale Welle 88 durchsetzt die Zentriereinrichtung 60. Die zentrale Welle 88 weist an ihrem freien Ende, das über die Zentriervorrichtung 60 hervorsteht, einen Kopplungsabschnitt 92 auf, vergleiche Figur 2b.

Die Aufnahmeeinrichtung 54 weist ferner ein Gehäuse 94 auf, das mit dem Andrückkörper 74 verbunden ist und das zur Aufnahme der Feder 72, des Kolbens 68 und des Druckraums 84 dient. Das Gehäuse 94 bildet einen Handhabungsabschnitt 96 (vergleiche Figur 3) mit einer zylindrischen Handhabungsfläche 96, welche sich konzentrisch zu der Aufnahmeachse 58 der Aufnahmeeinrichtung 54 erstreckt. Der Handhabungsabschnitt 96 ist insbesondere auf einer der ersten Andrückfläche 76 abgewandten Seite des Andrückkörpers 74 angeordnet.

Die Handhabungsfläche 98 dient zur Handhabung der Aufnahmeeinrichtung 54, und zwar insbesondere unter Verwendung eines Greifers 100, vergleiche Figur 2.

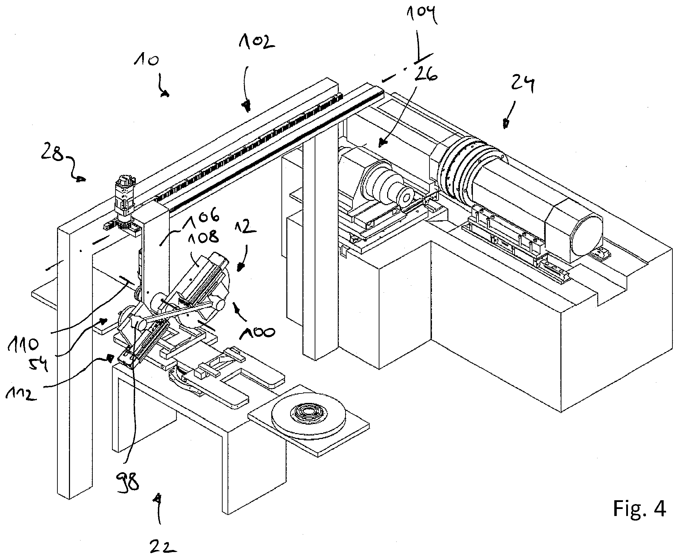

Der Greifer 100 ist Teil einer Transporteinrichtung 102, welche eine Transportachse 104 zur Überführung einer Bremsscheibenanordnung 86 aus dem Aufnahmebereich 22 zu dem Antriebssystem 26 aufweist, vergleiche Figur 4.

Die Transporteinrichtung 102 weist einen längs der Transportachse 104 motorisch betriebenen Transportarm 106 auf, an dem eine Transportwippe 108 um eine Achse 110 schwenkbar gelagert ist.

Die Transportwippe 108 dient zur Anordnung des Greifers 100, insbesondere einem Doppelbackengreifer, und vorzugsweise zur Anordnung eines weiteren Greifers 112, der ebenfalls dazu ausgebildet ist, eine Handhabungsfläche 98 einer Aufnahmeeinrichtung 54 zu ergreifen, vergleiche Figur 4.

Ausgehend von dem in Figur 3 dargestellten Zustand, in welchem die Bremsscheibe 12 an Aufnahmeeinrichtung 54 gesichert ist, wird die Bremsscheibe 12 zunächst außer Eingriff mit der Bremsscheibenaufnahme 42 gebracht. Zu diesem Zweck wird die Transportwippe 108 - ausgehend von dem Zustand gemäß Figur 2 und gemeinsam mit der Bremsscheibenanordnung 86 gemäß Figur 3 - nach oben verschwenkt, vergleiche Figur 4. Dies ermöglicht es, die Bremsscheibenaufnahme 42 ausgehend von der Vertikallage (siehe Figuren 2 bis 3) wieder zurück in ihre Horizontallage (siehe Fig. 4) zu verschwenken. Auf diese Weise kann der Transportarm 106 samt Transportwippe 108 und Greifer 100 gemeinsam mit der Bremsscheibenanordnung 86 kollisionsfrei entlang der Transportachse 104 dem Antriebssystem 26 der Doppelseitenschleifmaschine 24 zugeführt werden, vergleiche Figuren 4 und 5.

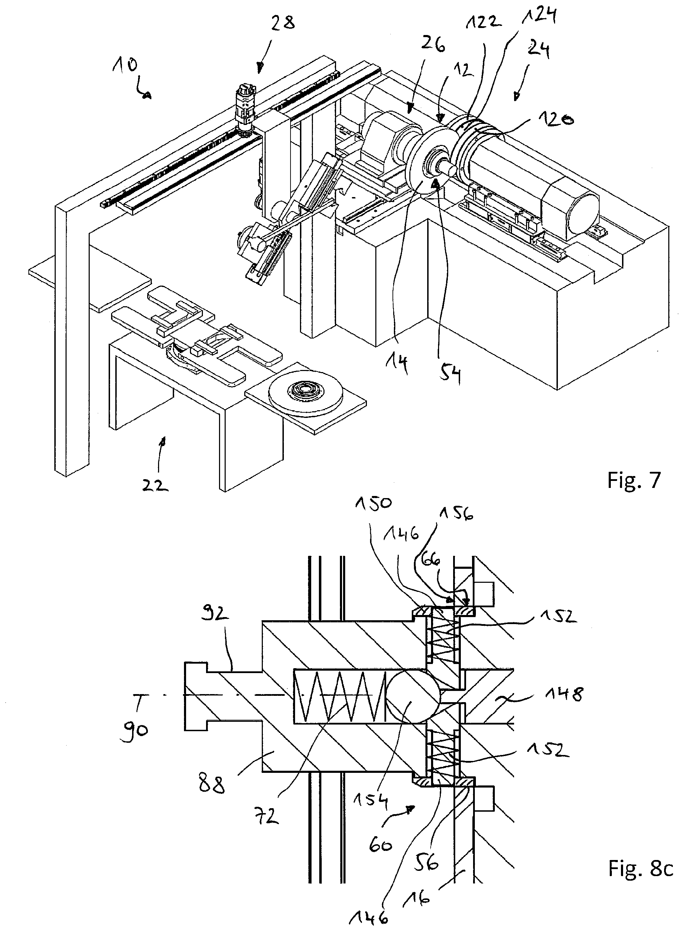

Das Antriebssystem 26 ist an einem Maschinenbett 114 der Doppelseitenschleifmaschine 24 angeordnet. Das Maschinenbett 114 dient zur Lagerung von zwei Schleifscheibenantrieben 116 und 118, mittels welchem jeweils eine Schleifscheibe 120, 122 rotierend antreibbar ist. Die beiden Schleifscheiben 120 und 122 begrenzen einen sich in einer vertikalen Ebene erstreckenden Arbeitsspalt 124, vergleiche Figur 7.

Das Antriebssystem 26 ist bezogen auf den Arbeitsspalt 124 seitlich versetzt angeordnet und umfasst einen relativ zu dem Maschinenbett 114 bewegbaren Träger 126, der mittels Führungen 128 längs einer horizontalen Zustellachse 130 in Richtung auf den Arbeitsspalt 124 und entgegengesetzt hierzu verfahrbar ist.

Der Träger dient zur Anordnung eines Spindelantriebs 132 das ein Spindelgehäuse 134 aufweist. Das Spindelgehäuse 134 ist relativ zu dem Träger 126 entlang einer horizontalen Hubachse 136 bewegbar, vergleiche Figuren 5b und 6, wobei die Hubachse 136 senkrecht zu der Zustellachse 130 verläuft.

Der Spindelantrieb 132 weist eine Spindel 131 mit einer zweiten Andrückfläche 138 auf, welche ringförmig ausgebildet ist und gemeinsam mit dem Spindelantrieb 132 längs der Hubachse 136 verfahrbar ist. Der Spindelantrieb 132 weist ein Spindelachse 140 auf, um welche herum die Spindel 131 mit der zweiten Andrückfläche 138 drehbar antreibbar ist.

In den Figuren 5 bis 5b ist ein Zustand dargestellt, in welchem die Bremsscheibenanordnung 86 noch an dem Greifer 100 gehalten ist und in welchem die Wellenachse 90 der zentralen Welle 88 der Aufnahmeeinrichtung 54 mit der Spindelachse 140 fluchtend angeordnet ist. Dabei ist die zweite Andrückfläche 138 des Spindelantriebs 132 zunächst noch zu der zweiten Stirnfläche 80 des Bremsscheibentopfs 16 der Bremsscheibe 12 beabstandet.

Der Spindelantrieb 132 weist einen Kopplungspartner 142 auf, der dazu ausgebildet ist, mit dem Kopplungsabschnitt 92 der zentralen Welle 88 zusammenzuwirken. Der Kopplungspartner 142 weist bewegbare Formschlusselemente (ohne Bezugszeichen) auf, deren Relativlage mittels eines Kopplungsantriebs 144 so einstellbar ist, dass die Formschlusselemente einen größeren Abstand zueinander aufweisen (vergleiche Figur 5b) bzw. einen kleineren Abstand zueinander aufweisen (vergleiche Figur 6).

Ein größerer Abstand der Formschlusselemente des Kopplungspartners 142 ermöglicht es, den Spindelantrieb 132 - ausgehend von dem Zustand gemäß Figur 5b - längs der Hubachse 136 in Richtung auf die Bremsscheibenanordnung 86 zu verfahren. Auf diese Weise kann das freie Ende der zentralen Welle 88 der Aufnahmeeinrichtung 54 in den Kopplungspartner 142 eingeführt werden; außerdem gelangt die zweite Andrückfläche 138 in Anlage mit der zweiten Stirnfläche 80 des Bremsscheibentopf 16, vergleiche Figur 6.

Eine Betätigung des Kopplungsantriebs 144 führt zu einem formschlüssigen Eingriff des Kopplungspartners 142 mit dem Kopplungsabschnitt 92 des freien Endes der zentralen Welle 88, vergleiche Figur 6. Der Kopplungsantrieb 144 übt außerdem eine Zugkraft auf den Kopplungspartner 142 und somit auf die zentrale Welle 88 aus, die sich über den Andrückkörper 74 und dessen erste Andrückfläche 76 auf die erste Stirnfläche 78 des Bremsscheibentopfs 16 überträgt. Gleichzeitig drückt die zweite Andrückfläche 138 des Spindeltriebs 132 gegen die zweite Stirnfläche 80 des Bremsscheibentopfs 16, sodass der Bremsscheibentopf 16 fest zwischen der ersten Andrückfläche 76 des Andrückkörpers 74 der Aufnahmeeinrichtung 54 und der zweiten Andrückfläche 138 des Spindeltriebs 132 eingespannt ist. Dies ist der in Figur 6 dargestellte Zustand.

In einem nächsten Schritt wird der Greifer 100 von der Handhabungsfläche 98 der Aufnahmeeinrichtung 54 entfernt, und der Spindelantrieb 132 wird gemeinsam mit der Bremsscheibenanordnung 86 entlang der Zustellachse 130 in Richtung auf den Arbeitsspalt 124 der Doppelseitenschleifmaschine 24 verfahren, bis der Reibring 16 der Bremsscheibe 12 in den Arbeitsspalt 124 eingeführt ist. Es schließt sich eine schleifende Bearbeitung der Reibflächen des Reibrings 16 mittels der beiden Schleifscheiben 120 und 122 an.

Im Anschluss an die schleifende Bearbeitung der Bremsscheibe 12 kann diese, immer unter Verwendung der Aufnahmeeinrichtung 54, wieder dem Aufnahmebereich 22 zugeführt werden. Dort kann die Bremsscheibe 12 von der Aufnahmeeinrichtung getrennt werden und an der Abführung 32 (vergleiche Figur 1) als Fertigteil entnommen werden.

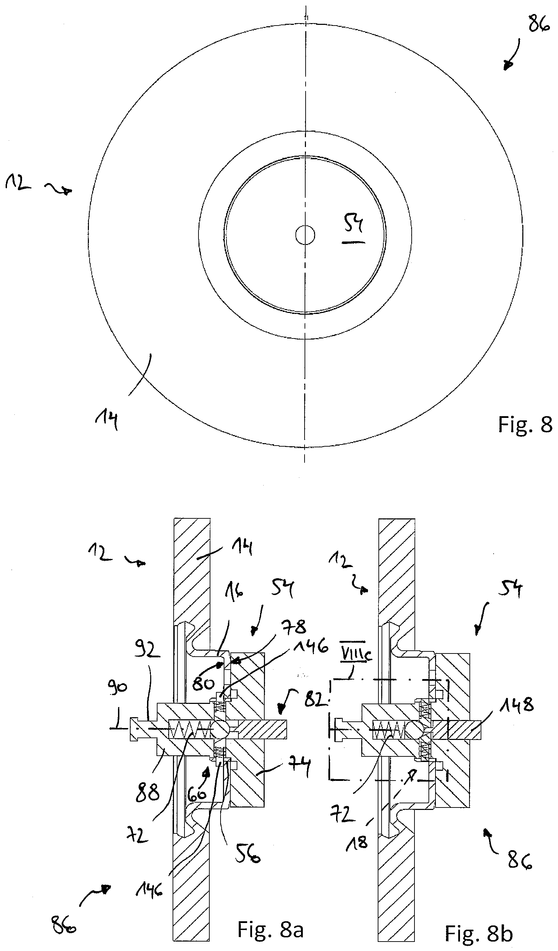

In den Figuren 8 bis 8c ist eine weitere Ausführungsform einer Bremsscheibenanordnung 86 mit einer Bremsscheibe 12 und einer Aufnahmeeinrichtung 54 dargestellt. Im Unterschied zu der kraftschlüssigen Zentrierung der vorstehend beschriebenen Zentriervorrichtung 60 wirkt die Zentriervorrichtung 60 der Aufnahmeeinrichtung 54 dieser weiteren Ausführungsform formschlüssig mit der Berandung 56 der Öffnung 18 des Bremsscheibentopfs 16 zusammen. Zu diesem Zweck weist die Zentriervorrichtung 60 mindestens ein Formschlusselement 146 auf, insbesondere zwei, drei oder vier Formschlusselement 146, die vorzugsweise regelmäßig entlang eines Umfangs verteilt angeordnet sind.

Diese sind federbeaufschlagt und erstrecken sich in einem Ruhezustand weiter nach radial außen (vergleiche Figur 8a) als in einem Einführzustand (vergleiche Figuren 8b und 8c).

Zur Überführung der Zentriervorrichtung 60 aus einem Ruhezustand gemäß Fig. 8a in den in Figuren 8b und 8c dargestellten Einführzustand ist eine Betätigungseinrichtung 82 in Form eines Betätigungsstifts 148 vorgesehen.

Die Zentriervorrichtung 60 umfasst einen Zentrierring 150, der eine nach radial außen weisende Zentrierfläche 66 bildet. Der Zentrierring 150 ist integraler Bestandteil der zentralen Welle 88 oder separat zu der Welle 88 bereitgestellt.

Bei dem in der Zeichnung dargestellten Ausführungsbeispiel hat der Zentrierring 150 eine Zusatzfunktion und bildet einen Anschlag für Stellfedern 152, welche den Formschlusselementen 146 zugeordnet sind und diese nach radial innen beaufschlagen. Die Formschlusselemente 146 wirken an ihren radial inneren Enden mit einer Blockierkugel 154 zusammen.

Der Betätigungsstift 148 wirkt der Vorspannkraft der Feder 72 entgegen und stellt die Verschlusselemente 146 durch Verschiebung der Blockierkugel 154 frei, sodass die Stellfedern 152 die Formschlusselemente 146 nach radial innen drücken, sodass die Berandung 56 der Öffnung 18 der Bremsscheibe 12 über die radial äußeren Enden der Formschlusselemente 146 hinweg auf die Zentrierfläche 66 verlagerbar ist.

Durch Lösen der Betätigungseinrichtung 82 wird die Feder 72 wieder entspannt, sodass die Blockierkugel 154 wieder eine Blockierstellung einnimmt, in welcher die Formschlusselemente 146 - entgegen der Wirkung der vergleichsweise schwachen Stellfedern 152 - nach radial außen gedrängt sind. In diesem Zustand stehen die Formschlusselemente 146 mit ihren radial äußeren Enden in einem Hintergriff / Formschluss mit einem Oberflächenabschnitt 156 der zweiten Stirnfläche 80 des Bremsscheibentopfs 16. Der Oberflächenabschnitt 156 grenzt an die Berandung 56 an.

Es versteht sich, dass auch die Aufnahmeeinrichtung 54 gemäß Figuren 8 bis 8c in einer Anlage 10 gemäß Figuren 1 bis 7 verwendet werden kann.

## Patentansprüche

1. Bremsscheibenanordnung (86) zum Transport einer Bremsscheibe (12) in einer Anlage zur Bearbeitung der Bremsscheibe (12), mit besagter Bremsscheibe (12), die einen Reibring (14) aufweist und einen Bremsscheibentopf (16) mit einer zu einer zentralen Bremsscheibenachse (20) konzentrischen Öffnung (18), die durch eine umfangsseitig geschlossene Berandung (56) begrenzt ist, mit einer Aufnahmeeinrichtung (54), welche eine zentrale Aufnahmeachse (58) und eine Zentriervorrichtung (60) mit mindestens einer Zentrierfläche (66) aufweist, wobei die Zentriervorrichtung (60) in einem Einführzustand der Zentriervorrichtung (60) in die Öffnung (18) des Bremsscheibentopfs (18) einführbar und in einem Sicherungszustand kraftschlüssig und/oder formschlüssig mit der Berandung (56) der Öffnung (18) und/oder mit einem an die Berandung (56) angrenzenden Oberflächenabschnitt (156) des Bremsscheibentopfs (16) zusammenwirkt und die Bremsscheibe (12) an der Aufnahmeeinrichtung (54) sichert, wobei die Aufnahmeeinrichtung (54) einen Andrückkörper (74) mit einer ersten Andrückfläche (76) zum Andrücken gegen eine ringförmige erste Stirnfläche (78) des Bremsscheibentopfs (16) aufweist, wobei die Aufnahmeeinrichtung (54) eine mit dem Andrückkörper (74) verbundene zentrale Welle (88) aufweist, welche mit einem freien Ende über die Zentriervorrichtung (60) hervorsteht, wobei das freie Ende mindestens einen Kopplungsabschnitt (92) aufweist, der ausgebildet ist zur Herstellung eines längs der Wellenachse (90) der zentralen Welle (88) wirksamen Formschlusses und/oder Kraftschlusses mit einem Kopplungspartner (142), der von einem Spindelantrieb (132) bereitgestellt ist.

2. Bremsscheibenanordnung (86) nach Anspruch 1, **dadurch gekennzeichnet, dass** die Bremsscheibenanordnung (86) derart ausgebildet ist, dass die Sicherung der Bremsscheibe (12) an der Aufnahmeeinrichtung (54) bei einem Transport wirksam ist, bei welchem die zentrale Bremsscheibenachse (20) horizontal orientiert ist.

3. Bremsscheibenanordnung (86) nach einem der vorstehenden Ansprüche, **dadurch gekennzeichnet, dass** die Zentriervorrichtung (60) in Richtung des Sicherungszustands vorgespannt ist und/oder dass der Sicherungszustand ein Ruhezustand der Aufnahmeeinrichtung (54) ist.

4. Bremsscheibenanordnung (86) nach Anspruch 3, **dadurch gekennzeichnet, dass** die Aufnahmeeinrichtung (54) zur Beaufschlagung der Zentriervorrichtung (60) eine Feder (72) aufweist.

5. Bremsscheibenanordnung (86) nach einem der vorstehenden Ansprüche, **dadurch gekennzeichnet, dass** die Aufnahmeeinrichtung (54) eine Betätigungseinrichtung (82) zur Überführung der Zentriervorrichtung (60) aus dem Sicherungszustand in den Einführzustand aufweist.

6. Bremsscheibenanordnung (86) nach einem der vorstehenden Ansprüche, **dadurch gekennzeichnet, dass** die Aufnahmeeinrichtung (54) einen Handhabungsabschnitt (96) mit einer Handhabungsfläche (98) zur Handhabung durch einen externen Greifer (100) aufweist.

7. Bremsscheibenanordnung (86) nach Anspruch 6, **dadurch gekennzeichnet, dass** sich die Handhabungsfläche (98) konzentrisch zu der Aufnahmeachse (58) erstreckt.

8. Bremsscheibenanordnung (86) nach Anspruch 7, **dadurch gekennzeichnet, dass** die Handhabungsfläche (98) einen Durchmesser aufweist, der maximal die Hälfte des Außendurchmessers des Reibrings (14) beträgt.

9. Bremsscheibenanordnung (86) nach einem der Ansprüche 6 bis 8, **dadurch gekennzeichnet, dass** der Handhabungsabschnitt (96) auf einer der ersten Andrückfläche (76) abgewandten Seite des Andrückkörpers (74) angeordnet ist.

10. Antriebssystem (26) zum Drehantrieb einer Bremsscheibe (12) einer Bremsscheibenanordnung (86) nach einem der Ansprüche 1 bis 9, wobei das Antriebssystem (26) die Bremsscheibenanordnung (86) umfasst und wobei das Antriebssystem (26) den Spindelantrieb (132) mit einer zweiten Andrückfläche (138) aufweist, welche gegen eine der ersten Stirnfläche (78) abgewandte, ringförmige zweite Stirnfläche (80) des Bremsscheibentopfs (16) andrückbar ist.

11. Antriebssystem nach Anspruch 10, **dadurch gekennzeichnet, dass** das Antriebssystem (26) einen Kopplungspartner (142) umfasst, der mit dem Kopplungsabschnitt (92) der zentralen Welle (88) zusammenwirkt und die zentrale Welle (88) auf Zug beansprucht, sodass die erste Andrückfläche (76) gegen die erste Stirnfläche (78) des Bremsscheibentopfs und die zweite Andrückfläche (138) gegen die zweite Stirnfläche (80) des Bremsscheibentopfs (16) angedrückt wird.

12. Antriebssystem nach Anspruch 11, **dadurch gekennzeichnet, dass** die erste Andrückfläche (76) und die zweite Andrückfläche (138) sich bezogen auf die Wellenachse (90) der zentralen Welle (88) in radialer Richtung überlappen.

13. Doppelseitenschleifmaschine (24) mit zwei Schleifscheiben (120, 122) und mit einem Antriebssystem (26) nach einem der Ansprüche 10 bis 12.

14. Doppelseitenschleifmaschine (24) nach Anspruch 13, **dadurch gekennzeichnet, dass** die Schleifscheiben (120, 122) um Schleifscheibenachsen rotierend antreibbar sind, welche horizontal orientiert sind.

15. Verfahren zur Bearbeitung einer Bremsscheibe (12), umfassend:
- Verwendung einer Bremsscheibenanordnung (86) nach einem der Ansprüche 1 bis 9 zum Transport der Bremsscheibe (12) von einem Bremsscheibenvorrat zu einem Antriebssystem (26) nach einem der Ansprüche 11 oder 12,
- Verbindung des Kopplungsabschnitts (92) des freien Endes der zentralen Welle (88) der Aufnahmeeinrichtung (54) mit dem Kopplungspartner (142) des Spindelantriebs (132) des Antriebssystems (26),
- Beaufschlagung des Kopplungspartners (142) mit einer Zugkraft und Andrücken der ersten Andrückfläche (76) gegen die erste Stirnfläche (78) des Bremsscheibentopfs (16) und der zweiten Andrückfläche (138) gegen die zweite Stirnfläche (80) des Bremsscheibentopfs (16),
- Positionierung des Reibrings (14) in einem Arbeitsraum (124) einer Doppelseitenschleifmaschine (24) nach Anspruch 13 oder 14,
- schleifende Bearbeitung der Reibflächen des Reibrings (14) unter Beibehaltung des Andrückkontakts der Andrückflächen (76, 138).

## Claims

1. A brake disc arrangement (86) for transporting a brake disc (12) in a system for machining a brake disc (12), comprising said brake disc (12) which has a friction ring (14) and a brake disc pot (16) having an opening (18) concentric to a central brake disc axis (20), which opening is delimited by a boundary (56) which is closed on the peripheral side, further comprising a receiving device (54) which has a central receiving axis (58) and a centering device (60) having at least one centering surface (66), wherein the centering device (60) can be inserted into the opening (18) of the brake disc pot (18) in an insertion state of the centering device (60) and, in a securing state, interacts in a force-fitting and/or form-fitting manner with the boundary (56) of the opening (18) and/or with a surface section (156) of the brake disc pot (16) adjoining the boundary (56), and secures the brake disc (12) to the receiving device (54), wherein the receiving device (54) has a pressing body (74) having a first pressing surface (76) for pressing against an annular first end face (78) of the brake disc pot (16), wherein the receiving device (54) has a central shaft (88) which is connected to the pressing body (74) and which protrudes with a free end beyond the centering device (60), wherein the free end has at least one coupling section (92) for producing a form fit and/or force fit acting along the shaft axis (90) of the central shaft (88) with a coupling partner (142) which is provided by a spindle drive (132) .

2. The brake disc arrangement (86) according to claim 1, **characterized in that** the brake disc arrangement (86) is configured such that the securing of the brake disc (12) to the receiving device (54) is effective during a transport in which the central brake disc axis (20) is oriented horizontally.

3. The brake disc arrangement (86) according to one of the preceding claims, **characterized in that** the centering device (60) is pretensioned in the direction of the securing state and/or that the securing state is a resting state of the receiving device (54).

4. The brake disc arrangement (86) according to claim 3, **characterized in that** the receiving device (54) has a spring (72) for acting on the centering device (60).

5. The brake disc arrangement (86) according to one of the preceding claims, **characterized in that** the receiving device (54) has an actuating device (82) for transferring the centering device (60) from the securing state into the insertion state.

6. The brake disc arrangement (86) according to one of the preceding claims, **characterized in that** the receiving device (54) has a handling section (96) having a handling surface (98) for handling by an external gripper (100).

7. The brake disc arrangement (86) according to claim 6, **characterized in that** the handling surface (98) extends concentrically to the receiving axis (58).

8. The brake disc arrangement (86) according to claim 7, **characterized in that** the handling surface (98) has a diameter which is at most half the outer diameter of the friction ring (14) .

9. The brake disc arrangement (86) according to one of the claims 6 to 8, **characterized in that** the handling section (96) is arranged on a side of the pressing body (74) facing away from the first pressing surface (76).

10. A drive system (26) for rotationally driving a brake disc (12) of a brake disc arrangement (86) according to one of the claims 1 to 9, wherein the drive system (26) comprises the brake disc arrangement (86) and wherein the drive system (26) has a spindle drive (132) having a second pressing surface (138) which can be pressed against an annular second end face (80) of the brake disc pot (16) facing away from the first end face (78).

11. The drive system (26) according to claim 10, **characterized in that** the drive system (26) comprises a coupling partner (142) that interacts with the coupling section (92) of the central shaft (88) and applies tension to the central shaft (88) so that the first pressing surface (76) is pressed against the first end face (78) of the brake disc pot and the second pressing surface (138) is pressed against the second end face (80) of the brake disc pot (16).

12. The drive system (26) according to claim 11 , **characterized in that** the first pressing surface (76) and the second pressing surface (138) overlap in radial direction in relation to the shaft axis (90) of the central shaft (88).

13. A double side grinding machine (24) comprising two grinding wheels (120, 122) and comprising a drive system (26) according to one of the claims 10 to 12.

14. The double-sided grinding machine (24) according to claim 13, **characterized in that** the grinding wheels (120, 122) can be driven in a rotating manner about grinding wheel axes which are oriented horizontally.

15. A method for machining a brake disc (12), the method comprising:
- use of a brake disc arrangement (86) according to one of the claims 1 to 9 for transporting the brake disc (12) from a brake disc supply to a drive system (26) according to one of the claims 11 or 12,
- connecting the coupling section (92) of the free end of the central shaft (88) of the receiving device (54) to the coupling partner (142) of the spindle drive (132) of the drive system (26),
- applying a tensile force to the coupling partner (142) and pressing the first pressing surface (76) against the first end face (78) of the brake disc pot (16) and the second pressing surface (138) against the second end face (80) of the brake disc pot (16),
- positioning the friction ring (14) in a working area (124) of a double side grinding machine (24) according to claim 13 or 14,
- grinding machining of the friction surfaces of the friction ring (14) while maintaining the pressing contact of the pressing surfaces (76, 138).

## Revendications

1. Ensemble de disque de frein (86) pour le transport d'un disque de frein (12) dans une installation pour l'usinage du disque de frein (12), avec ledit disque de frein (12) qui présente une bague de friction (14) et un bol de disque de frein (16) avec une ouverture (18) concentrique à un axe de disque de frein central (20), qui est limitée par un bord (56) fermé sur la périphérie, avec un équipement de réception (54), lequel présente un axe de réception central (58) et un dispositif de centrage (60) avec au moins une surface de centrage (66), dans lequel le dispositif de centrage (60) peut être introduit dans l'ouverture (18) du bol de disque de frein (18) dans un état d'introduction du dispositif de centrage (60) et coopère à force et/ou par complémentarité de forme avec le bord (56) de l'ouverture (18) et/ou avec une section de surface (156) du bol de disque de frein (16) adjacente au bord (56) dans un état de blocage et bloque le disque de frein (12) sur l'équipement de réception (54), dans lequel l'équipement de réception (54) présente un corps de pression (74) avec une première surface de pression (76) pour la pression contre une première surface frontale (78) de forme annulaire du bol de disque de frein (16), dans lequel l'équipement de réception (54) présente un arbre central (88) relié au corps de pression (74), lequel dépasse avec une extrémité libre du dispositif de centrage (60), dans lequel l'extrémité libre présente au moins une section d'accouplement (92), qui est réalisée pour établir une liaison par complémentarité de forme et/ou une liaison à force agissant le long de l'axe d'arbre (90) de l'arbre central (88) avec un partenaire d'accouplement (142) qui est mis à disposition par un entraînement à broche (132).

2. Ensemble de disque de frein (86) selon la revendication 1, **caractérisé en ce que** l'ensemble de disque de frein (86) est réalisé de telle sorte que le blocage du disque de frein (12) sur l'équipement de réception (54) agit lors d'un transport au cours duquel l'axe de disque de frein central (20) est orienté horizontalement.

3. Ensemble de disque de frein (86) selon l'une quelconque des revendications précédentes, **caractérisé en ce que** le dispositif de centrage (60) est précontraint en direction de l'état de blocage et/ou que l'état de blocage est un état de repos de l'équipement de réception (54).

4. Ensemble de disque de frein (86) selon la revendication 3, **caractérisé en ce que** l'équipement de réception (54) présente un ressort (72) pour solliciter le dispositif de centrage (60).

5. Ensemble de disque de frein (86) selon l'une quelconque des revendications précédentes, **caractérisé en ce que** l'équipement de réception (54) présente un équipement d'actionnement (82) pour faire passer le dispositif de centrage (60) de l'état de blocage à l'état d'insertion.

6. Ensemble de disque de frein (86) selon l'une quelconque des revendications précédentes, **caractérisé en ce que** l'équipement de réception (54) présente une section de manipulation (96) avec une surface de manipulation (98) pour la manipulation par un dispositif de préhension externe (100).

7. Ensemble de disque de frein (86) selon la revendication 6, **caractérisé en ce que** la surface de manipulation (98) s'étend concentriquement à l'axe de réception (58).

8. Ensemble de disque de frein (86) selon la revendication 7, **caractérisé en ce que** la surface de manipulation (98) présente un diamètre qui est au maximum égal à la moitié du diamètre extérieur de la bague de friction (14) .

9. Ensemble de disque de frein (86) selon l'une quelconque des revendications 6 à 8, **caractérisé en ce que** la section de manipulation (96) est disposée sur une face du corps de pression (74) opposée à la première surface de pression (76).

10. Système d'entraînement (26) pour l'entraînement en rotation d'un disque de frein (12) d'un ensemble de disque de frein (86) selon l'une quelconque des revendications 1 à 9, dans lequel le système d'entraînement (26) comprend l'ensemble de disque de frein (86) et dans lequel le système d'entraînement (26) présente l'entraînement à broche (132) avec une deuxième surface de pression (138), laquelle peut être pressée contre une deuxième surface frontale (80) annulaire, opposée à la première surface frontale (78), du bol de disque de frein (16).

11. Système d'entraînement selon la revendication 10, **caractérisé en ce que** le système d'entraînement (26) comprend un partenaire d'accouplement (142), qui coopère avec la section d'accouplement (92) de l'arbre central (88) et sollicite l'arbre central (88) en traction, de sorte que la première surface de pression (76) est pressée contre la première surface frontale (78) du bol de disque de frein et la deuxième surface de pression (138) contre la deuxième surface frontale (80) du bol de disque de frein (16).

12. Système d'entraînement selon la revendication 11, **caractérisé en ce que** la première surface de pression (76) et la deuxième surface de pression (138) se chevauchent dans la direction radiale par rapport à l'axe d'arbre (90) de l'arbre central (88).

13. Rectifieuse double face (24) avec deux meules (120, 122) et avec un système d'entraînement (26) selon l'une quelconque des revendications 10 à 12.

14. Rectifieuse double face (24) selon la revendication 13, **caractérisée en ce que** les meules (120, 122) peuvent être entraînées en rotation autour d'axes de meule, lesquels sont orientés horizontalement.

15. Procédé d'usinage d'un disque de frein (12), comprenant :
- l'utilisation d'un ensemble de disque de frein (86) selon l'une quelconque des revendications 1 à 9 pour le transport du disque de frein (12) à partir d'une réserve de disque de frein vers un système d'entraînement (26) selon l'une quelconque des revendications 11 ou 12,
- - la liaison de la section d'accouplement (92) de l'extrémité libre de l'arbre central (88) de l'équipement de réception (54) au partenaire d'accouplement (142) de l'entraînement à broche (132) du système d'entraînement (26),
- - la sollicitation du partenaire d'accouplement (142) avec une force de traction et la pression de la première surface de pression (76) contre la première surface frontale (78) du bol de disque de frein (16) et de la deuxième surface de pression (138) contre la deuxième surface frontale (80) du bol de disque de frein (16),
- - le positionnement de la bague de friction (14) dans un espace de travail (124) d'une rectifieuse double face (24) selon la revendication 13 ou 14,
- - l'usinage par abrasion des surfaces de friction de la bague de friction (14) tout en conservant le contact de pression des surfaces de pression (76, 138).
